# EUROPEAN PATENT APPLICATION

(11) **EP 4 835 970 A1**
(43) Date of publication of application: **04.11.2026**
(21) Application number: 24912402.5
(22) Date of filing: 12.12.2024
(51) Int. Cl.: H01M 4/13, H01M 4/134, H01M 4/36, H01M 4/38, H01M 10/052, H01M 10/058

(54) **NON-AQUEOUS ELECTROLYTE SECONDARY BATTERY**

(30) Priority: 28.12.2023 JP 2023222103
(71) Applicant: Panasonic Intellectual Property Management Co., Ltd., Kadoma-shi, Osaka 571-0057 (JP)
(72) Inventor: KURODA, Kosuke, Kadoma-shi, Osaka 571-0057 (JP); SUZUKI, Hirotetsu, Kadoma-shi, Osaka 571-0057 (JP)
(74) Representative: Novagraaf International SA
(86) International application number: PCT/JP2024/043982
(87) International publication number: WO 2025/142513

(57) **Abstract**

A non-aqueous electrolyte secondary battery (10) comprises an electrode body (14) that has a positive electrode (11) and a negative electrode (12), and a non-aqueous electrolyte, said non-aqueous electrolyte secondary battery (10) being characterized in that: the positive electrode (11) has a positive electrode collector (30) and a positive electrode mixture layer (32) which is provided on the positive electrode collector (30); the negative electrode (12) has a negative electrode collector (40) and a negative electrode mixture layer (42) which is provided on the negative electrode collector (40); the positive electrode mixture layer (32) contains a positive electrode active material; the positive electrode active material has first and second peaks in a volume-based particle size distribution curve; the negative electrode mixture layer (42) contains a negative electrode active material; the negative electrode active material contains at least a silicon-containing material; and the discharge capacity per 1.0 g of the negative electrode mixture layer (42) is not less than 0.60Ah.

## Description

### TECHNICAL FIELD

The present disclosure relates to a non-aqueous electrolyte secondary battery.

### BACKGROUND ART

Conventionally, there is known a non-aqueous electrolyte secondary battery comprising: an electrode assembly in which a positive electrode and a negative electrode are wound with a separator; and a housing can that houses the electrode assembly, in which the positive electrode has a positive electrode mixture layer disposed on a positive electrode current collector, and the negative electrode has a negative electrode mixture layer disposed on a negative electrode current collector.

In recent years, from the viewpoint of increasing the capacity of a non-aqueous electrolyte secondary battery, use of a silicon-containing material has been studied as a negative electrode active material included in a negative electrode mixture layer (see, for example, Patent Literature 1), the silicon-containing material being capable of occluding more lithium ions per unit mass than carbon materials such as graphite.

### CITATION LIST

### PATENT LITERATURE

PATENT LITERATURE 1: International Publication No. WO 2019/151016

### SUMMARY

However, silicon-containing materials exhibit larger volume changes (expansion and contraction) due to the occlusion of lithium ions than carbon materials. Consequently, in a non-aqueous electrolyte secondary battery using a silicon-containing material in the negative electrode mixture layer, the distribution of the electrolyte solution within the electrode assembly may become non-uniform due to the repeated expansion and contraction of the negative electrode mixture layer during charging and discharging. As a result, the battery capacity may decrease over repeated charge-discharge cycles. Therefore, it remains a challenge to achieve both higher capacity and improved charge-discharge cycle characteristics in a non-aqueous electrolyte secondary battery.

A non-aqueous electrolyte secondary battery in one aspect of the present disclosure comprises an electrode assembly having a positive electrode and a negative electrode; and a non-aqueous electrolyte, wherein the positive electrode has a positive electrode current collector and a positive electrode mixture layer disposed on the positive electrode current collector, the negative electrode has a negative electrode current collector and a negative electrode mixture layer disposed on the negative electrode current collector, the positive electrode mixture layer includes a positive electrode active material, the positive electrode active material having a first peak and a second peak in a volume-based particle size distribution curve, the negative electrode mixture layer including a negative electrode active material, wherein the negative electrode active material includes at least a silicon-containing material, and a discharge capacity per 1.0 g of the negative electrode mixture layer is greater than or equal to 0.60 Ah.

The non-aqueous electrolyte secondary battery in one aspect of the present disclosure can achieve both higher capacity and improved charge-discharge cycle characteristics of the non-aqueous electrolyte secondary battery.

### BRIEF DESCRIPTION OF DRAWING

FIG. 1 is an axial sectional view of a non-aqueous electrolyte secondary battery as an example of an embodiment.
FIG. 2 is a schematic diagram schematically illustrating an example of a structure of a negative electrode mixture layer.

### DESCRIPTION OF EMBODIMENTS

Hereinafter, an example of an embodiment of the non-aqueous electrolyte secondary battery according to the present disclosure will be described in detail with reference to the drawing. Note that the scope of the present disclosure includes a configuration composed of selective combination of constituents of a plurality of embodiments and modifications described below.

Hereinafter, a cylindrical battery including a wound electrode assembly accommodated in a bottomed cylindrical housing can will be illustrated as the non-aqueous electrolyte secondary battery, but the housing can of the battery is not limited to a cylindrical housing can. The secondary battery according to the present disclosure may be, for example, a rectangular battery comprising a rectangular housing can, a coin-shaped battery comprising a coin-shaped housing can, or a pouch battery comprising an outer case composed of a laminate sheet including a metal layer and a resin layer. The electrode assembly is not limited to a wound type and may be a stacked electrode assembly in which a plurality of positive electrodes and a plurality of negative electrodes are alternately stacked one by one with separators interposed therebetween.

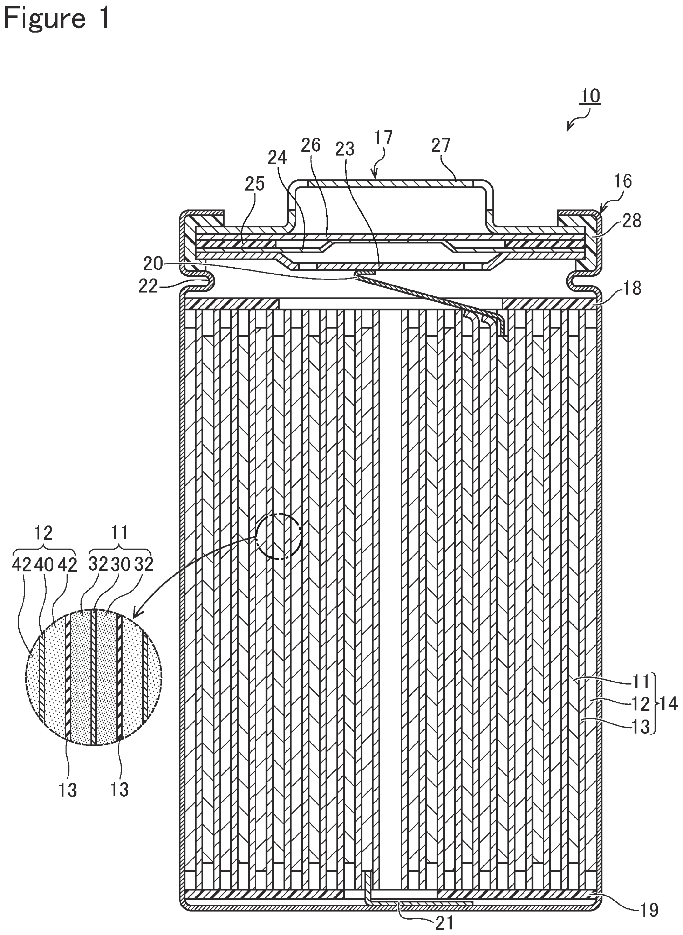

FIG. 1 is a sectional view of a non-aqueous electrolyte secondary battery 10 as an example of an embodiment. As illustrated in FIG. 1, the non-aqueous electrolyte secondary battery 10 comprises an electrode assembly 14, a non-aqueous electrolyte, and a housing can 16 that houses the electrode assembly 14 and the non-aqueous electrolyte. The electrode assembly 14 includes a positive electrode 11, a negative electrode 12, and a separator 13 and has a wound structure in which the positive electrode 11 and the negative electrode 12 are wound with the separator 13 in a spiral shape. The housing can 16 is a bottomed cylindrical metal container having an opening on one side in an axial direction, and the opening of the housing can 16 is sealed with a sealing assembly 17. Hereinafter, for convenience of explanation, the side of the sealing assembly 17 of the battery is described as the "top", and the bottom side of the housing can 16 is described as the "bottom".

The positive electrode 11, the negative electrode 12, and the separator 13 that constitute the electrode assembly 14 are each a long strip-shaped member, and they are alternately stacked in the radial direction of the electrode assembly 14 by being wound in a spiral shape. The negative electrode 12 is formed to be one size larger than the positive electrode 11 to prevent precipitation of lithium. In other words, the negative electrode 12 is formed longer in the longitudinal direction and the width direction than the positive electrode 11. The two separators 13 are formed at least one size larger than the positive electrode 11 and disposed to sandwich the positive electrode 11, for example. The electrode assembly 14 has a positive electrode lead 20 connected to the positive electrode 11 by means of welding or the like, and a negative electrode lead 21 connected to the negative electrode 12 by means of welding or the like.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends through a through-hole in the insulating plate 19 to the side of the bottom of the housing can 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the housing can 16 by means of welding or the like, and the housing can 16 serves as a negative electrode terminal.

A gasket 28 is provided between the housing can 16 and the sealing assembly 17 to ensure that the interior of the battery is tightly sealed. The housing can 16 includes a grooved portion 22 formed to have a part of a side surface portion projected inward and support the sealing assembly 17. The grooved portion 22 is preferably formed annularly along the peripheral direction of the housing can 16, supporting the sealing assembly 17 by the upper surface thereof. The sealing assembly 17 is fixed to an upper portion of the housing can 16 by means of the grooved portion 22 and an opening end portion of the housing can 16 which is crimped to the sealing assembly 17.

The sealing assembly 17 has a structure in which an internal terminal plate 23, a lower valve member 24, an insulating member 25, an upper valve member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower valve member 24 and the upper valve member 26 are connected to each other at the respective central portions, and the insulating member 25 is interposed between peripheral edge portions of these valve members. When the internal pressure of the battery increases due to abnormal heat generation, the lower valve member 24 deforms and ruptures in a manner pushing up the upper valve member 26 toward the cap 27, and the current path between the lower valve member 24 and the upper valve member 26 is thereby cut off. When the internal pressure further increases, the upper valve member 26 ruptures, and gas is discharged from an opening portion in the cap 27.

Hereinafter, the positive electrode 11, the negative electrode 12, the separator 13, and the non-aqueous electrolyte, all of which constitute the electrode assembly 14, and in particular the positive electrode 11 and the negative electrode 12, will be described in detail.

### [Positive Electrode]

The positive electrode 11 has, for a positive electrode current collector 30 and a positive electrode mixture layer 32 disposed on the positive electrode current collector 30. As the positive electrode current collector 30, a foil of a metal that is stable in the potential range of the positive electrode 11, such as aluminum or an aluminum alloy, and a film with the metal disposed on the surface layer, or the like can be used. The positive electrode mixture layer 32, for example, includes a positive electrode active material, a conductive agent, and a binder.

The positive electrode 11 can be produced, for example, by applying a positive electrode mixture slurry including a positive electrode active material, a conductive agent, a binder, and other components onto a positive electrode current collector 30, drying the coating, and then compressing the dried coating to form positive electrode mixture layers 32 on both surfaces of the positive electrode current collector 30.

The positive electrode mixture layer 32 includes a particulate lithium-containing composite oxide as a positive electrode active material. The lithium-containing composite oxide is a composite oxide containing metal elements such as Co, Mn, Ni, and Al in addition to Li. Specifically, the lithium-containing composite oxide is, for example, a composite oxide represented by a compositional formula Li_{y}NiₓM₍₁₋ₓ₎O_{2-δ}, where 0.5 ≤ x ≤ 1, 0 ≤ y ≤ 1.2, 0 ≤ δ ≤ 0.05, and M includes at least one element selected from the group consisting of Co, Mn, Al, Fe, Ti, Sr, Ca, Si, Nb, Zr, Mo, Zn, and B.

In the compositional formula, M preferably includes at least one element selected from the group consisting of Co, Mn, Al, and Fe. Note that in the compositional formula, the value of y indicating the compositional ratio of lithium increases and decreases by charging and discharging. Examples of a suitable lithium-containing composite oxide include a lithium-containing composite oxide containing Ni, Co, and Mn, or a lithium-containing composite oxide containing Ni, Co, and Al.

The content of Ni in the lithium-containing composite oxide is preferably greater than or equal to 50 mol% relative to the total number of moles of metal elements excluding Li. An increase in the content of Ni can improve the battery capacity. Note that the content of Ni may be greater than or equal to 60 mol%, greater than or equal to 70 mol%, or greater than or equal to 80 mol%, relative to the total number of moles of metal elements excluding Li. The upper limit of the content of Ni is, for example, 98 mol% relative to the total number of moles of metal elements excluding Li.

The content of Co in the lithium-containing composite oxide is, for example, greater than or equal to 0 mol% and less than or equal to 20 mol% relative to the total number of moles of metal elements excluding Li. In other words, the lithium-containing composite oxide may be free of Co. The lithium-containing composite oxide can improve the heat resistance of the battery by containing Co.

The content of Mn in the lithium-containing composite oxide is, for example, greater than or equal to 0 mol% and less than or equal to 50 mol% relative to the total number of moles of metal elements excluding Li, and Mn is an optional component. In other words, the lithium-containing composite oxide may be free of Mn. The lithium-containing composite oxide can stabilize the crystal structure by containing Mn.

The content of Al in the lithium-containing composite oxide is, for example, greater than or equal to 0 mol% and less than or equal to 20 mol% relative to the total number of moles of metal elements excluding Li, and Al is an optional component. In other words, the lithium-containing composite oxide may be free of Al. The lithium-containing composite oxide can stabilize the crystal structure by containing Al.

The content of the elements constituting the lithium-containing composite oxide can be measured using an inductively coupled plasma atomic emission spectrometer (ICP-AES), an electron probe microanalyzer (EPMA), an energy dispersive X-ray spectrometer (EDX), or the like.

Here, the positive electrode active material has a first peak and a second peak in a volume-based particle size distribution curve (hereinafter simply referred to as a "particle size distribution curve"). That is, the positive electrode active material includes a first positive electrode active material group in which a peak top position of the particle size distribution curve corresponds to a top position of the first peak, and a second positive electrode active material group in which a peak top position of the particle size distribution curve corresponds to a top position of the second peak.

The particle size distribution curve of the positive electrode active material can be measured using a laser diffraction particle size distribution measuring device (for example, MT3000II, manufactured by MicrotracBEL Corp.) with water as the dispersion medium. The peak of the particle size distribution curve is a peak in a volume-based particle size distribution graph in which the horizontal axis represents the particle diameter [µm] and the vertical axis represents frequency [%]. The peak top position of the particle size distribution curve refers to a particle diameter at which the peak reaches a maximum value thereof.

Since the particle size distribution curve of the positive electrode active material has a first peak and a second peak, the diffusibility of the non-aqueous electrolyte in the positive electrode mixture layer 32 is improved, thus achieving a uniform distribution of the non-aqueous electrolyte in the positive electrode mixture layer 32. Although the detailed mechanism is not clear, it is presumed that since the particle size distribution curve of the positive electrode active material has the first peak and the second peak, the tortuosity of voids (pores) formed in the positive electrode mixture layer 32 through which the non-aqueous electrolyte passes is reduced, thereby securing flow paths for the non-aqueous electrolyte.

As will be described in detail later, the negative electrode mixture layer 42 of the present embodiment includes a predetermined amount of a silicon-containing material, and a discharge capacity per 1.0 g of the negative electrode mixture layer 42 is greater than or equal to 0.60 Ah. Since the silicon-containing material can occlude more lithium ions per unit mass than carbon materials such as graphite, higher capacity can be realized. However, the silicon-containing material exhibits a large volume change during charging and discharging. Therefore, the distribution of the non-aqueous electrolyte within the electrode assembly 14 may become non-uniform due to the expansion and contraction of the negative electrode mixture layer 42 caused by charging and discharging. In particular, since the positive electrode mixture layer 32 is compressed due to the expansion of the negative electrode mixture layer 42, the distribution of the non-aqueous electrolyte within the positive electrode mixture layer 32 tends to become non-uniform. If the distribution of the non-aqueous electrolyte in the positive electrode mixture layer 32 becomes non-uniform, unevenness in the charge-discharge reaction occurs within the electrode assembly 14, and the charge-discharge cycle characteristics tend to deteriorate.

Accordingly, even when a predetermined amount of the silicon-containing material is used in the negative electrode mixture layer 42 and the discharge capacity per 1.0 g of the negative electrode mixture layer 42 is greater than or equal to 0.60 Ah, the use of a positive electrode active material whose particle size distribution curve has a first peak and a second peak in the positive electrode mixture layer 32 makes it possible to improve the diffusibility of the non-aqueous electrolyte in the positive electrode mixture layer 32. As a result, both high capacity and improved charge-discharge cycle characteristics of the non-aqueous electrolyte secondary battery can be achieved.

In the particle size distribution curve of the positive electrode active material, the position of the first peak is preferably greater than or equal to 0.5 µm and less than 5.0 µm, and more preferably greater than or equal to 2.0 µm and less than or equal to 4.5 µm. The position of the second peak is preferably greater than or equal to 10.0 µm and less than or equal to 20.0 µm, and more preferably greater than or equal to 12.0 µm and less than or equal to 18.0 µm. When the position of the first peak is greater than or equal to 0.5 µm and less than or equal to 5 µm, and the position of the second peak is greater than or equal to 10 µm and less than or equal to 20 µm, flow paths for the non-aqueous electrolyte can be more readily formed in the positive electrode mixture layer 32, thereby further improving the diffusibility of the non-aqueous electrolyte in the positive electrode mixture layer 32. As a result, the charge-discharge cycle characteristics can be further improved.

The positive electrode active material includes, for example, a first lithium-containing composite oxide having a volume-based median diameter (D50) of greater than or equal to 0.5 µm and less than 5.0 µm and a second lithium-containing composite oxide having a volume-based D50 of greater than or equal to 10.0 µm and less than or equal to 20.0 µm. Herein, the D50 refers to the particle diameter at which the cumulative frequency in the volume-based particle size distribution reaches 50% from the smaller-diameter side, and is also referred to as the median diameter.

The first lithium-containing composite oxide and the second lithium-containing composite oxide are each composed of at least one of a single particle and a secondary particle formed by aggregation of a plurality of single particles. Note that a single particle refers to a primary particle having no grain boundaries within the particle. A secondary particle is formed by, for example, aggregation of greater than or equal to 2 and less than or equal to 1000 single particles.

Here, the first lithium-containing composite oxide may be composed of a single particle, and the second lithium-containing composite oxide may be composed of a secondary particle. When the first lithium-containing composite oxide is composed of a single particle and the second lithium-containing composite oxide is composed of a secondary particle, flow paths for the non-aqueous electrolyte can be more readily formed in the positive electrode mixture layer 32. Note that both the first lithium-containing composite oxide and the second lithium-containing composite oxide may be composed of a single particle, or both may be composed of a secondary particle.

A proportion of a mass of the first lithium-containing composite oxide relative to the total mass of the positive electrode active material is, for example, greater than or equal to 20 mass% and less than or equal to 80 mass%. A proportion of a mass of the second lithium-containing composite oxide relative to the total mass of the positive electrode active material is, for example, greater than or equal to 20 mass% and less than or equal to 80 mass%.

The positive electrode active material may include a lithium-containing composite oxide other than the first lithium-containing composite oxide and the second lithium-containing composite oxide (hereinafter referred to as a "third lithium-containing composite oxide"). Examples of the third lithium-containing composite oxide include a lithium-containing composite oxide having a volume-based D50 of greater than or equal to 5.0 µm and less than 10.0 µm, and a lithium-containing composite oxide having a volume-based D50 of greater than 20.0 µm.

When the positive electrode active material includes the third lithium-containing composite oxide, the positive electrode active material may have a third peak in the particle size distribution curve, in addition to the first peak and the second peak. When the positive electrode active material includes the third lithium-containing composite oxide, the positive electrode active material preferably contains the first lithium-containing composite oxide and the second lithium-containing composite oxide as main components. More specifically, a sum of masses of the first lithium-containing composite oxide and the second lithium-containing composite oxide relative to the total mass of the positive electrode active material is preferably greater than or equal to 90 mass%, and more preferably greater than or equal to 95 mass%.

The positive electrode active material as an example of an embodiment can be produced by the method described below. Note that the production method described herein is merely an example, and the method for producing a positive electrode active material is not limited to this method.

The production process of the positive electrode active material includes a synthesis step of obtaining a metal composite oxide, a cleaning step of washing a fired product with water and thendehydrating the water-washed product to obtain a cake-like composition, and a drying step of drying the cake-like composition to obtain a powder-like composition.

In the synthesis step, for example, a metal oxide containing a predetermined amount of Ni and M (where M represents at least one element selected from the group consisting of Co, Mn, Al, Fe, Ti, Sr, Ca, Si, Nb, Zr, Mo, Zn, and B) is mixed with a Li compound to obtain a metal composite oxide.

The metal oxide can be obtained, for example, by adding an alkaline solution such as sodium hydroxide dropwise to a solution of metal salts including Ni and M while stirring to adjust the pH to the alkaline side (for example, greater than or equal to 8.5 and less than or equal to 12.5), thereby precipitating (coprecipitating) a composite hydroxide including Ni and M, and then subjecting the composite hydroxide to heat treatment. The heat treatment temperature is not particularly limited, but is in the range of, for example, greater than or equal to 250°C and less than or equal to 600°C.

Here, the particle diameter of the final lithium-containing composite oxide can be adjusted by the particle diameter of the composite hydroxide serving as a precursor. The particle diameter of the composite hydroxide tends to decrease as the pH during synthesis increases. In addition, the particle diameter of the composite hydroxide can also be controlled by adjusting the amount of the metal salt solution to be added, and, for example, tends to increase as the amount of the solution increases.

Examples of the Li compounds include Li₂CO₃, LiOH, Li₂O₂, Li₂O, LiNO₃, LiNO₂, Li₂SO₄, LiOH·H₂O, LiH, and LiF. The mixing ratio of the metal oxide and the Li compound affects the particle diameter of the lithium-containing composite oxide. For example, the mixing ratio of the metal oxide and the Li compound is preferably such that a molar ratio of a total amount of metal elements in the metal oxide to Li is in a range of greater than or equal to 1:0.8 and less than or equal to 1:1.2, and more preferably greater than or equal to 1:1.0 and less than or equal to 1:1.1 or less.

The synthesis step includes a firing step of firing the obtained mixture. In the firing step, the mixture is fired, for example, under an oxygen atmosphere. The firing conditions may be a temperature rising rate at greater than or equal to 450°C and less than or equal to 680°C in the range of greater than 1.0°C/min and less than or equal to 5.5°C/min and a maximum attainable temperature in the range of greater than or equal to 700°C and less than or equal to 850°C. The temperature rising rate from greater than 680°C to the maximum attainable temperature may be, for example, greater than or equal to 0.1°C/min and less than or equal to 3.5°C/min. The holding time of the maximum attainable temperature may be greater than or equal to 1 hour and less than or equal to 30 hours. The firing step may be a multi-step firing, and a plurality of first temperature rising rates and a plurality of second temperature rising rates may be set for each temperature region as long as the first temperature rising rate and the second temperature rising rate are within the above-defined ranges. The particle diameter of the lithium-containing composite oxide can be adjusted by adjusting firing conditions. For example, the particle diameter of the lithium-containing composite oxide can be increased by increasing the maximum reached temperature.

In the cleaning step, the metal composite oxide obtained in the synthesis step was washed with water and then dehydrated to obtain a cake-like composition. Water washing can remove unreacted fractions of the lithium compound added in the synthesis step and impurities other than the lithium compound. In water washing, for example, greater than or equal to 300 g and less than or equal to 5000 g of the lithium-containing composite oxide is charged per 1 L of water. Note that the water washing may be repeated a plurality of times, and dehydration after the water washing can be performed, for example, using a filter press. In addition, various compounds such as a Ca compound, a Sr compound, a Fe compound, a Cu compound, a Zr compound, a Mg compound, a Si compound, a Cr compound, a Ti compound, a S compound, and a fluoride may be added to the cake-like composition obtained in the cleaning step.

In the drying step, the cake-like composition obtained in the cleaning step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

As described above, the positive electrode mixture layer 32 includes a conductive agent and a binder in addition to the positive electrode active material. Examples of the conductive agent included in the positive electrode mixture layer 32 include carbon black such as acetylene black and Ketjenblack, graphite, carbon nanotubes (CNTs), carbon nanofibers and graphene. The content of the conductive agent in the positive electrode mixture layer 32 is, for example, greater than or equal to 0.5 mass% and less than or equal to 5 mass% relative to the total mass of the positive electrode mixture layer 32.

Examples of the binder included in positive electrode mixture layer 32 include fluorine-containing polymers such as polytetrafluoroethylene (PTFE) and polyvinylidene fluoride (PVDF), polyacrylonitrile (PAN), polyimide, acrylic resin, and polyolefin. These resins may be used in combination with carboxymethyl cellulose (CMC) or a salt thereof, polyethylene oxide (PEO), or the like. The content of the binder in the positive electrode mixture layer 32 is, for example, greater than or equal to 0.5 mass% and less than or equal to 5 mass% relative to the total mass of the positive electrode mixture layer 32.

Here, the basis weight of the positive electrode mixture layer 32 may be greater than or equal to 250 g/m², or may be greater than or equal to 270 g/m². Generally, increasing the basis weight of the positive electrode mixture layer 32 can achieve a higher capacity of a battery. However, when the basis weight of the positive electrode mixture layer 32 is increased, the diffusibility of the non-aqueous electrolyte in the positive electrode mixture layer 32 decreases, which tends to degrade the charge-discharge cycle characteristics. In particular, when the negative electrode mixture layer 42 includes a silicon-containing material, the degradation of the charge-discharge cycle characteristics is significant.

In the present embodiment, as described above, the positive electrode active material has a particle size distribution curve with a first peak and a second peak. This improves the diffusibility of the non-aqueous electrolyte in the positive electrode mixture layer 32, realizing a uniform distribution of the non-aqueous electrolyte in the positive electrode mixture layer 32. That is, when the positive electrode active material whose particle size distribution curve has a first peak and a second peak is used, the diffusibility of the non-aqueous electrolyte in the positive electrode mixture layer 32 is ensured even if the basis weight of the positive electrode mixture layer 32 is increased. As a result, a higher capacity of the battery can be achieved while ensuring the charge-discharge cycle characteristics. The upper limit of the basis weight of the positive electrode mixture layer 32 is, for example, 400 g/m². Note that the basis weight of the positive electrode mixture layer 32 means the weight per unit area of the positive electrode mixture layer 32 formed on the surface of the positive electrode current collector 30.

### [Negative Electrode]

The negative electrode 12 has a negative electrode current collector 40 and a negative electrode mixture layer 42 formed on the surface of the negative electrode current collector 40. The negative electrode mixture layer 42 is preferably formed on both the surfaces of the negative electrode current collector 40. As the negative electrode current collector 40, a metal foil that is stable in the potential range of the negative electrode 12, such as copper or a copper alloy, or a film with the metal disposed on a surface layer may be used. The thickness of the negative electrode current collector 40 is, for example, greater than or equal to 5 µm and less than or equal to 30 µm.

The negative electrode mixture layer 42 includes, for example, a negative electrode active material and a binder. The thickness of the negative electrode mixture layer 42 is, for example, greater than or equal to 50 µm and less than or equal to 300 µm. The negative electrode 12 can be produced, for example, by applying a negative electrode mixture slurry including a negative electrode active material and a binder onto the surface of the negative electrode current collector 40, drying the coating, and then rolling the dried coating to form the negative electrode mixture layer 42 on both the surfaces of the negative electrode current collector 40.

In the negative electrode mixture layer 42, the discharge capacity per 1.0 g of the negative electrode mixture layer 42 is greater than or equal to 0.60 Ah, preferably greater than or equal to 0.70 Ah, and more preferably greater than or equal to 0.80 Ah. Making the discharge capacity per 1.0 g of the negative electrode mixture layer 42 greater than or equal to 0.60 Ah may achieve a higher capacity of the battery. Note that the discharge capacity per 1.0 g of the negative electrode mixture layer 42 can be adjusted, for example, by a mass proportion of silicon element contained in the negative electrode active material. For example, increasing the mass proportion of the silicon element contained in the negative electrode active material can increase the discharge capacity per 1.0 g of the negative electrode mixture layer 42. The upper limit of the discharge capacity per 1.0 g of the negative electrode mixture layer 42 is not particularly limited but is, for example, 1.5 Ah. Note that the discharge capacity per 1.0 g of the negative electrode mixture layer 42 can be determined by the method described in Examples.

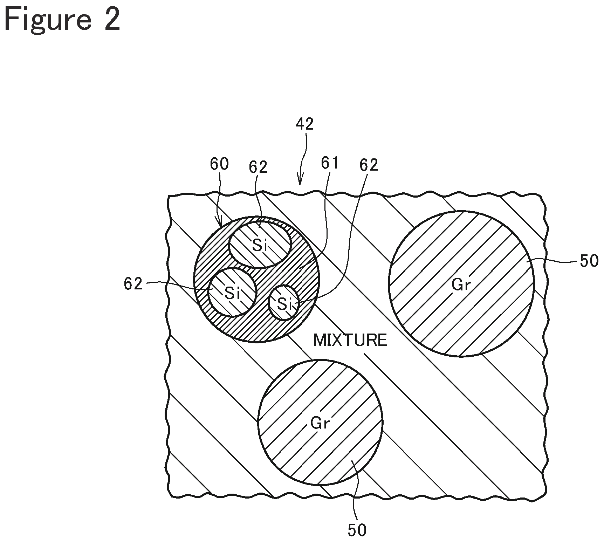

FIG. 2 is a schematic diagram schematically illustrating an example of the structure of the negative electrode mixture layer 42. As illustrated in FIG. 2, the negative electrode mixture layer 42 preferably includes a carbon material such as graphite 50 and a silicon-containing material 60. As described above, the silicon-containing material 60 can occlude more lithium ions per unit mass than carbon materials such as graphite 50. Therefore, by using the silicon-containing material 60 in the negative electrode active material, a higher capacity of the battery can be achieved.

The carbon material included in the negative electrode mixture layer 42 is, for example, at least one selected from the group consisting of natural graphite, artificial graphite, soft carbon, and hard carbon. The carbon material preferably used among these is at least, artificial graphite such as massive artificial graphite (MAG) and graphitized mesophase-carbon microbeads (MCMBs), natural graphite such as flake graphite, massive graphite, and amorphous graphite, or a mixture thereof. The volume-based D50 of the carbon material is, for example, greater than or equal to 1 µm and less than or equal to 30 µm, and preferably greater than or equal to 5 µm and less than or equal to 25 µm.

The silicon-containing material 60 included in the negative electrode mixture layer 42 may be any material containing a silicon element. Examples thereof include a silicon alloy, a silicon compound, and a composite material containing a silicon element, among which a composite material containing a silicon element is preferred. The volume-based median diameter (D50) of the composite material is generally smaller than the volume-based median diameter (D50) of the carbon material. The volume-based D50 of the composite material is, for example, greater than or equal to 1 µm and less than or equal to 15 µm. Note that the additives may be used singly or in combination with two or more types thereof.

A preferable silicon-containing material 60 is of composite particles including an ion-conductive phase 61 and a silicon phase 62 dispersed in the ion-conductive phase 61. The silicon phase 62 is formed of silicon elements dispersed in the form of fine particles. Further, the composite particles may have a conductive layer that covers a portion of the surface of the ion-conductive phase 61. The conductive layer is composed of a material having higher conductivity than the ion-conductive phase 61, and forms a favorable conductive path within the negative electrode mixture layer 42. The conductive layer includes, for example, conductive carbon and covers an area of greater than or equal to 30% and less than or equal to 70% of the surface of the ion-conductive phase 61. Note that the coverage of the conductive layer can be calculated using, for example, X-ray photoelectron spectroscopy (XPS).

The ion-conductive phase 61 is a continuous phase composed of an aggregate of particles finer than the silicon phase 62. The ion-conductive phase 61 is at least one selected from the group consisting of a silicate phase, a carbon phase, a silicide phase, and a silicon oxide phase. Note that, in order to suppress a volume change of the negative electrode active material during charging and discharging and to increase charge-discharge efficiency, the ion-conductive phase 61 preferably includes a carbon phase.

The silicate phase preferably includes at least one element selected from lithium, sodium, potassium, rubidium, cesium, francium, beryllium, magnesium, calcium, strontium, barium, and radium, for example, from the viewpoint of high lithium-ion conductivity. Among these, the silicate phase is preferably a silicate phase containing lithium (hereinafter sometimes referred to as "lithium silicate phase") from the viewpoint of high lithium-ion conductivity and the like.

The lithium silicate phase is represented, for example, by a formula Li_{2z}SiO_{2+z} (0 < z < 2). From the viewpoints of stability, ease of production, lithium-ion conductivity, and the like, z preferably satisfies the relationship 0 < z < 1, and more preferably z = 1/2.

Another preferred example of the silicon-containing material 60 is a composite particle having a sea-island structure in which fine silicon phases 62 are substantially uniformly dispersed within an amorphous silicon oxide phase, and which as a whole is represented by the general formula SiOₓ (0 < x ≤ 2). The main component of the silicon oxide may be silicon dioxide. The content ratio (x) of the oxygen element to the silicon element is, for example, 0.5 ≤ x < 2.0, and is preferably 0.8 ≤ x ≤ 1.5.

Another preferred example of the silicon-containing material 60 is a composite particle having a sea-island structure in which fine silicon phases 62 are substantially uniformly dispersed in a carbon phase. The carbon phase is preferably an amorphous carbon phase. The carbon phase may include a crystalline phase component, but an amorphous phase component is preferably dominant. The amorphous carbon phase is composed of, for example, a carbon material having an average lattice spacing of (002) planes exceeding 0.34 nm as measured by an X-ray diffraction method. The amorphous carbon phase is composed of, for example, particles of amorphous carbon. Note that when the silicon-containing material 60 is a composite particle having a sea-island structure in which fine silicon phases 62 are substantially uniformly dispersed in a carbon phase, the total mass of the silicon element contained in the silicon-containing material 60 may coincide with the mass of the silicon phase 62.

The proportion of the mass of the silicon phase 62 relative to the total mass of the silicon-containing material 60 is preferably greater than or equal to 30 mass%. In this case, the discharge capacity increases, and the battery tends to have a high output. In addition, the proportion of the mass of the silicon phase 62 relative to the total mass of the silicon-containing material 60 is preferably less than or equal to 60 mass%. In this case, the volume change of the negative electrode mixture layer 42 during charging and discharging can be reduced, the expansion and contraction of the electrode assembly 14 during charging and discharging are suppressed, and the durability of the battery tends to be excellent. Therefore, the proportion of the mass of the silicon phase 62 relative to the total mass of the silicon-containing material 60 is preferably greater than or equal to 30 mass% and less than or equal to 60 mass%.

The crystallite size of the silicon phase 62 constituting the composite particles is, for example, greater than or equal to 10 nm and less than or equal to 30 nm. The crystallite size of the silicon phase 62 is calculated by Scherrer's equation from the full width at half maximum of an analytical peak assigned to the Si (111) plane in an X-ray diffraction pattern of the silicon phase 62.

The proportion of the total mass of the silicon element contained in the silicon-containing material 60 relative to the mass of the negative electrode mixture layer 42 is preferably greater than or equal to 12 mass%, more preferably greater than or equal to 15 mass%, and even more preferably greater than or equal to 20 mass%. Making the proportion of the total mass of the silicon element contained in the silicon-containing material 60 relative to the mass of the negative electrode mixture layer 42 greater than or equal to 12 mass% becomes it easy to make the discharge capacity per 1.0 g of the negative electrode mixture layer 42 greater than or equal to 0.60 Ah, and a higher capacity of the battery can be achieved.

In addition, the proportion of the total mass of the silicon element contained in the silicon-containing material 60 relative to the mass of the negative electrode mixture layer 42 is preferably less than or equal to 50 mass%, more preferably less than or equal to 45 mass%, and even more preferably less than or equal to 40 mass%. If the proportion of the total mass of the silicon element contained in the silicon-containing material 60 relative to the mass of the negative electrode mixture layer 42 exceeds 50 mass%, the volume change of the negative electrode mixture layer 42 during charging and discharging becomes excessively large, and the diffusibility of the non-aqueous electrolyte in the electrode assembly 14 may decrease. Therefore, the proportion of the total mass of the silicon element contained in the silicon-containing material 60 relative to the mass of the negative electrode mixture layer 42 is preferably greater than or equal to 12 mass% and less than or equal to 50 mass%, more preferably greater than or equal to 15 mass% and less than or equal to 45 mass%, and even more preferably greater than or equal to 20 mass% and less than or equal to 40 mass%. Note that the mass of the silicon element may be approximately the same as the mass of the silicon phase 62. That is, the ratio of the mass of the silicon phase 62 to the mass of the negative electrode mixture layer 42 may be greater than or equal to 12 mass% and less than or equal to 50 mass%.

The total mass of the silicon element contained in the silicon-containing material 60 can be measured using ICP (Inductively Coupled Plasma). ICP is a method of optical emission spectrometry. When plasma energy is externally applied to an analysis sample, the constituent elements (atoms) contained therein are excited. In ICP, emission lines (spectral lines) are measured which are emitted when the excited atoms return to a lower energy level, and based on the measured emission lines, the content of the constituent elements (atoms) is measured.

As described above, the negative electrode mixture layer 42 includes a binder in addition to the negative electrode active material. Examples of the binder contained in the negative electrode mixture layer 42 include fluorine-containing resins such as styrene-butadiene rubber (SBR), nitrile-butadiene rubber (NBR), polytetrafluoroethylene (PTFE), and polyvinylidene fluoride (PVDF); polyacrylonitrile (PAN); polyimide resins; acrylic resins; and polyolefin resins. Among these, SBR and NBR are preferred, and SBR is particularly preferred. The binders may be used singly or in combination with two or more types thereof. The content of the binder in the negative electrode mixture layer 42 is, for example, greater than or equal to 0.5 mass% and less than or equal to 5 mass% relative to the mass of the negative electrode mixture layer 42.

The negative electrode mixture layer 42 may further contain a thickener. Examples of the thickener include carboxymethyl cellulose (CMC) or salts thereof (such as CMC-Na), polyacrylic acid (PAA) or salts thereof (such as PAA-Na, PAA-K, or partially neutralized salts), polyethylene oxide (PEO), and polyvinyl alcohol (PVA). The thickeners may be used singly or in combination with two or more types thereof. The content of the thickener in the negative electrode mixture layer 42 is, for example, greater than or equal to 0.5 mass% and less than or equal to 10 mass% relative to the mass of the negative electrode mixture layer 42.

### [Separator]

As the separator 13, a porous sheet having ion permeability and insulation properties may be used. Specific examples of the porous sheet include microporous thin films, woven fabrics, and nonwoven fabrics. Types of material for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

### [Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved in the non-aqueous solvent. For the non-aqueous solvent, esters, ethers, nitriles such as acetonitrile, amides such as dimethylformamide, and a mixed solvent composed of two or more thereof are used, for example. The non-aqueous solvent may contain a halogen-substituted product in which hydrogen of these solvents is at least partially substituted with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include LiClO₄, LiBF₄, LiPF₆, LiAlC₄, LiSbF₆, LiSCN, LiCF₃SO₃, LiCF₃CO₂, LiAsF₆, LiB₁₀Cl₁₀, lower aliphatic carboxylic acid lithium salts, LiCl, LiBr, LiI, phosphate salts, borate salts, and imide salts. Examples of the phosphate salts include lithium difluorophosphate (LiPO₂F₂), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Among these, LiPF₆ is preferably used from the standpoint of ionic conductivity and electrochemical stability. The concentration of the lithium salt may be, for example, less than or equal to 4 mol per liter of non-aqueous solvent, or less than or equal to 3 mol, and is preferably less than or equal to 1.8 mol, and more preferably greater than or equal to 0.8 mol and less than or equal to 1.8 mol.

The non-aqueous electrolyte may contain additives. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanate methyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries (for example, oxide-based solid electrolytes, sulfide-based solid electrolytes, and halogen-based solid electrolytes) may be used. The polymer electrolyte may include, for example, a lithium salt and a matrix polymer, or a non-aqueous solvent, a lithium salt, and a matrix polymer. As the matrix polymer, polymer materials that absorb the non-aqueous solvent and form a gel may be used. Examples of the polymer materials include fluororesins, acrylic resins, and polyether resins.

### EXAMPLES

Hereinafter, the present disclosure will be described in more detail with reference to Examples, but the present disclosure is not limited to these Examples.

### <Example 1>

### [Production of Lithium-Containing Transition Metal Composite Oxide A]

A composite hydroxide represented by [Ni_{0.90}Co_{0.05}Al_{0.05}](OH)₂ obtained by a coprecipitation method was fired at 500°C for 8 hours to obtain a metal oxide including Ni, Co, and Al. At this time, the pH and the amount of the metal salt solution were adjusted so that the D50 of the finally obtained lithium-containing composite oxide would be 4.0 um. Next, lithium hydroxide monohydrate (LiOH·H₂O) was mixed so that a molar ratio of Li to a total amount of Ni, Co, and Al became 1:1.03, thereby obtaining a mixture. Then, the mixture was heated under an oxygen stream having an oxygen concentration of 95% from room temperature to 650°C at a temperature rising rate of 2.0°C/min and fired, and then heated from 650°C to 740°C at a temperature rising rate of 0.5°C/min and fired. Subsequently, the fired product was pulverized, washed with water, and dried to obtain a lithium-containing composite oxide A composed of single particles represented by LiNi_{0.90}Co_{0.05}Al_{0.05}O₂.

### [Production of Lithium-Containing Composite Oxide B]

A composite hydroxide represented by [Ni_{0.90}Co_{0.05}Al_{0.05}](OH)₂ obtained by a coprecipitation method was fired at 500°C for 8 hours to obtain a metal oxide including Ni, Co, and Al. At this time, the pH and the amount of the metal salt solution were adjusted so that the D50 of the finally obtained lithium-containing composite oxide would be 16.0 µm. Next, lithium hydroxide monohydrate (LiOH·H₂O) was mixed so that a molar ratio of Li to a total amount of Ni, Co, and Al became 1:1.03, thereby obtaining a mixture. Then, the mixture was heated under an oxygen stream having an oxygen concentration from room temperature to 650°C at a temperature rising rate of 2.0°C/min and fired, and then heated from 650°C to 740°C at a temperature rising rate of 10.5°C/min and fired. Subsequently, the fired product was pulverized, washed with water, and dried to obtain a lithium-containing composite oxide B composed of secondary particles represented by LiNi_{0.90}Co_{0.05}Al_{0.05}O₂.

### [Production of Positive Electrode]

As the positive electrode active material, a mixture of the lithium-containing composite oxide A and lithium-containing composite oxide B at a mass ratio of 30:70 was used. The positive electrode active material, acetylene black, and polyvinylidene fluoride (PVdF) were mixed at a solid mass ratio of 95:3:2, and N-methyl-2-pyrrolidone (NMP) was used as a dispersion medium to prepare a positive electrode mixture slurry. The positive electrode mixture slurry was applied to both surfaces of a positive electrode current collector made of aluminum foil, and the coating was dried and then rolled using a roller. Thereafter, the coating was cut into a predetermined electrode size to obtain a positive electrode in which a positive electrode mixture layer was formed on both the surfaces of the positive electrode current collector. At this time, the basis weight of the positive electrode mixture layer was 350 g/m².

For the positive electrode active material, a volume-based particle size distribution curve was measured using a laser diffraction particle size distribution measuring device (model: MT3000II, manufactured by MicrotracBEL Corp.) with water as the dispersion medium. As a result, a first peak appeared at a position of 4.0 µm, and a second peak appeared at a position of 16.0 µm.

### [Production of Silicon-Containing Material]

Coal pitch (MCP250, manufactured by JFE Chemical Corporation) as a carbon raw material and raw material silicon (3N, average particle diameter: 10 µm) were mixed at a mass ratio of 66:33, and the mixture was pulverized and micronized using a planetary ball mill (P-5, manufactured by Fritsch GmbH). Next, the micronized powder mixture was fired in an inert atmosphere to carbonize the carbon source, thereby obtaining a sintered product in which a silicon phase was dispersed within an amorphous carbon phase. Thereafter, the sintered product was pulverized using a jet mill to obtain a silicon-containing particle as a silicon-containing material having a D50 of 10 µm. Note that the proportion of the total mass of the silicon phase relative to the total mass of the silicon-containing material was 50 mass%.

### [Production of Negative Electrode]

As the negative electrode active material, a mixture of graphite and the above silicon-containing material at a mass ratio of 50:50 was used. The negative electrode active material, styrene-butadiene rubber (SBR), and carboxymethyl cellulose (CMC) were mixed at a solid content mass ratio of 98:1:1, and an appropriate amount of water was added to prepare a negative electrode mixture slurry. The negative electrode mixture slurry was applied to both surfaces of a negative electrode current collector made of copper foil, the coating was dried and then rolled using a roller. Thereafter, the coating was cut into a predetermined electrode size to obtain a negative electrode in which a negative electrode mixture layer was formed on both the surfaces of the negative electrode current collector. Note that the proportion of the total mass of silicon element contained in the silicon-containing material relative to the mass of the negative electrode mixture layer produced was 25 mass%.

### [Preparation of Non-Aqueous Electrolyte (Electrolyte Solution)]

The electrolyte solution was prepared by adding LiPF₆ (lithium salt) to a non-aqueous solvent. The concentration of LiPF₆ in the electrolyte solution was adjusted to 1.0 mol/L. As the non-aqueous solvent, a mixed solvent including ethylene carbonate (EC) and ethyl methyl carbonate (EMC) at a volume ratio of EC:EMC = 3:7 was used.

### [Production of Test Cell (Non-Aqueous Electrolyte Secondary Battery)]

An aluminum lead was attached to a portion of the positive electrode, a nickel lead was attached to a portion of the negative electrode, and the positive electrode and the negative electrode were wound with a polyolefin separator in a spiral shape to produce a wound electrode assembly. Insulating plate were each arranged above and below the electrode assembly, and the electrode assembly was housed in a housing can. A negative electrode lead was welded to the bottom of a bottomed cylindrical housing can, and a positive electrode lead was welded to a sealing assembly. The electrolyte solution was injected into the housing can, and an opening portion of the housing can was sealed with the sealing assembly via a gasket to produce a non-aqueous secondary battery as a test cell.

### [Evaluation of Discharge Capacity per 1.0 g of Negative Electrode Mixture Layer]

The produced test cell was disassembled, and the negative electrode taken out was placed to face lithium serving as a positive electrode. Subsequently, discharge was performed from a state where the negative electrode was 5 mV higher than lithium to a state where the negative electrode was 1 V higher than lithium. A negative electrode discharge utilization (Ah/g), which is defined as a discharge capacity per 1.0 g of the negative electrode mixture layer, was calculated based on the electric charge released during the discharge.

### [Evaluation of Initial Discharge Capacity and Charge-Discharge Cycle Characteristics]

The produced test cell was charged at a constant current of 0.3 C under temperature environment of 25°C until a battery voltage reached 4.2 V, and then charged at a constant voltage of 4.2V until the current value reached 0.02 C. Thereafter, the test cell was discharged at a constant current of 0.5 C until the battery voltage reached 2.5 V, and the discharge capacity at this time was defined as an initial discharge capacity. This charge-discharge operation was defined as one cycle and was repeated for 100 cycles. The initial discharge capacity and the discharge capacity at 100th cycle were determined to calculate the capacity retention rate using the following equation. 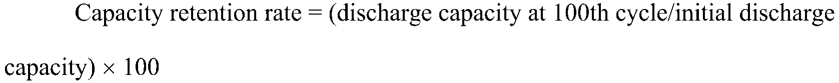 Capacity retention rate = (discharge capacity at 100th cycle/initial discharge capacity) × 100

### <Example 2>

A test cell was produced and evaluated in the same manner as in Example 1, except that a mixture of graphite and a silicon-containing material at a mass ratio of 60:40 was used in the production of the negative electrode. The proportion of the total mass of silicon element contained in the silicon-containing material relative to the mass of the negative electrode mixture layer produced was 20 mass%.

### <Example 3>

A test cell was produced and evaluated in the same manner as in Example 1, except that a mixture of graphite and a silicon-containing material at a mass ratio of 70:30 was used in the production of the negative electrode. The proportion of the total mass of silicon element contained in the silicon-containing material relative to the mass of the negative electrode mixture layer produced was 15 mass%.

### <Example 4>

A test cell was produced and evaluated in the same manner as in Example 1, except that the basis weight of the positive electrode mixture layer was 250 g/m².

### <Example 5>

A test cell was produced and evaluated in the same manner as in Example 1, except that the basis weight of the positive electrode mixture layer was 240 g/m².

### <Comparative Example 1>

A test cell was produced and evaluated in the same manner as in Example 1, except that in the production of the positive electrode, only the following lithium-containing composite oxide C was used as a positive electrode active material, and in the production of the negative electrode, a mixture of graphite and a silicon-containing material at a mass ratio of 92:8 was used.

For the produced positive electrode active material, a volume-based particle size distribution curve was measured using a laser diffraction particle size distribution measuring device (model: MT3000II, manufactured by MicrotracBEL Corp.) with water as the dispersion medium. As a result, a peak appeared only at a position of 12.0 µm. The basis weight of the positive electrode mixture layer was 350 g/m². The proportion of the total mass of silicon element contained in the silicon-containing material relative to the mass of the negative electrode mixture layer produced was 4 mass%.

### [Production of Lithium-Containing Composite Oxide C]

A composite hydroxide represented by [Ni_{0.90}Co_{0.05}Al_{0.05}](OH)₂ obtained by a coprecipitation method was fired at 500°C for 8 hours to obtain a metal oxide including Ni, Co, and Al. At this time, the pH and the amount of the metal salt solution were adjusted so that the D50 of the finally obtained lithium-containing composite oxide would be 12.0 µm. Next, lithium hydroxide monohydrate (LiOH·H₂O) was mixed so that a molar ratio of Li to a total amount of Ni, Co, and Al became 1:1.03, thereby obtaining a mixture. Then, the mixture was heated under an oxygen stream having an oxygen concentration of 95% from room temperature to 650°C at a temperature rising rate of 2.0°C/min and fired, and then heated from 650°C to 740°C at a temperature rising rate of 0.5°C/min and fired. Subsequently, the fired product was pulverized, washed with water, and dried to obtain a lithium-containing composite oxide C composed of secondary particles represented by LiNi_{0.90}Co_{0.05}Al_{0.05}O₂.

### <Comparative Example 2>

A test cell was produced and evaluated in the same manner as in Example 1, except that only the lithium-containing composite oxide C was used as the positive electrode active material in the production of the positive electrode. The basis weight of the positive electrode mixture layer was 300 g/m².

### <Comparative Example 3>

A test cell was produced and evaluated in the same manner as in Example 1, except that a mixture of graphite and a silicon-containing material at a mass ratio of 92:8 was used in the production of the negative electrode. The basis weight of the positive electrode mixture layer was 350 g/m².

Table 1 lists the initial discharge capacity and capacity retention rate of the test cells in Examples 1 to 5 and Comparative Examples 1 to 3. The discharge capacity per 1.0 g of the negative electrode mixture layer is also listed in Table 1. Note that the initial discharge capacity of each of the test cells of Examples 1 to 5 and Comparative Examples 1 to 3 listed in Table 1 are expressed relative to the initial discharge capacity of the test cell of Comparative Example 1, which is taken as 100. A larger value of the initial discharge capacity indicates higher capacity.

**[Table 1]**

| | Positive electrode mixture layer | | | Negative electrode mixture layer | | Evaluation result | |
|---|---|---|---|---|---|---|---|
| | Positive electrode active material | | Basis weight of positive electrode mixture layer [g/m²] | Proportion of total mass of silicon element [mass%] | Discharge capacity per 1.0 g [Ah/g] | Initial discharge capacity (relative value) | Capacity retention rate [%] |
| | Number of peaks in particle size distribution curve | Peak position in particle size distribution curve [µm] | | | | | |
| Example 1 | 2 | 4.0/16.0 | 350 | 25 | 1.11 | 115 | 97.2 |
| Example 2 | 2 | 4.0/16.0 | 350 | 20 | 0.97 | 113 | 96.9 |
| Example 3 | 2 | 4.0/16.0 | 350 | 15 | 0.81 | 110 | 96.9 |
| Example 4 | 2 | 4.0/16.0 | 250 | 25 | 1.11 | 108 | 97.1 |
| Example 5 | 2 | 4.0/16.0 | 240 | 25 | 1.11 | 107 | 97.1 |
| Comparative Example 1 | 1 | 12.0 | 350 | 4 | 0.48 | 100 | 94.2 |
| Comparative Example 2 | 1 | 12.0 | 300 | 25 | 1.11 | 108 | 92.6 |
| Comparative Example 3 | 2 | 4.0/16.0 | 350 | 4 | 0.48 | 104 | 94.4 |

As shown in Table 1, the test cells of Examples each have improved initial discharge capacity and capacity retention rate compared with the test cells of Comparative Examples. More specifically, using a positive electrode active material whose particle size distribution curve has a first peak and a second peak while using a predetermined amount of a silicon-containing material in the negative electrode active material to make a discharge capacity per 1.0 g of the negative electrode mixture layer greater than or equal to 0.60 Ah may achieve both higher capacity and improved charge-discharge cycle characteristics of the non-aqueous electrolyte secondary battery.

On the other hand, the test cell of Comparative Example 2, which used a positive electrode active material whose particle size distribution curve had only one peak while using a silicon-containing material in the negative electrode mixture layer to make the discharge capacity per 1.0 g of the negative electrode mixture layer greater than or equal to 0.60 Ah exhibited an improved initial discharge capacity but a decrease in the capacity retention rate compared to the test cell of Comparative Example 1. This is presumably because, although a higher capacity can be achieved by increasing the amount of the silicon-containing material in the negative electrode mixture layer, a large volume change of the negative electrode mixture layer decreases the diffusibility of the non-aqueous electrolyte in the positive electrode mixture layer, making it difficult to improve the charge-discharge cycle characteristics unless a positive electrode active material whose particle size distribution curve has a first peak and a second peak is used.

The test cell of Comparative Example 3, which used a positive electrode active material whose particle size distribution curve had a first peak and a second peak but made the discharge capacity per 1.0 g of the negative electrode mixture layer less than 0.60 Ah, exhibited a slight improvement in initial discharge capacity but no improvement in capacity retention rate compared to the test cell of Comparative Example 1. Thus, it can be stated that the charge-discharge cycle characteristics are specifically improved by using a positive electrode active material whose particle size distribution curve has a first peak and a second peak while making the discharge capacity per 1.0 g of the negative electrode mixture layer greater than or equal to 0.60 Ah.

The present disclosure will be further described with reference to embodiments below.

### Constitution 1:

A non-aqueous electrolyte secondary battery, comprising: an electrode assembly having a positive electrode and a negative electrode; and a non-aqueous electrolyte, wherein the positive electrode has a positive electrode current collector and a positive electrode mixture layer disposed on the positive electrode current collector, the negative electrode has a negative electrode current collector and a negative electrode mixture layer disposed on the negative electrode current collector, the positive electrode mixture layer includes a positive electrode active material, the positive electrode active material having a first peak and a second peak in a volume-based particle size distribution curve, the negative electrode mixture layer including a negative electrode active material, wherein the negative electrode active material includes at least a silicon-containing material, and a discharge capacity per 1.0 g of the negative electrode mixture layer is greater than or equal to 0.60 Ah.

### Constitution 2:

The non-aqueous electrolyte secondary battery according to Constitution 1, wherein the first peak has a peak top at a position of greater than or equal to 0.5 µm and less than 5.0 µm, and the second peak has a peak top at a position of greater than or equal to 10.0 um and less than or equal to 20.0 µm.

### Constitution 3:

The non-aqueous electrolyte secondary battery according to Constitution 1, wherein a basis weight of the positive electrode mixture layer is greater than or equal to 250 g/m² and less than or equal to 400 g/m² or less.

### Constitution 4:

The non-aqueous electrolyte secondary battery according to any one of Constitutions 1 to 3, wherein a proportion of a total mass of silicon element contained in the silicon-containing material relative to a mass of the negative electrode mixture layer is greater than or equal to 12 mass%.

### Constitution 5:

The non-aqueous electrolyte secondary battery according to any one of Constitutions 1 to 4, wherein a proportion of a total mass of silicon element contained in the silicon-containing material relative to a mass of the negative electrode mixture layer was less than or equal to 50 mass%.

### Constitution 6:

The non-aqueous electrolyte secondary battery according to any one of Constitutions 1 to 5, wherein a proportion of a total mass of silicon element contained in the silicon-containing material relative to a mass of the negative electrode mixture layer was less than or equal to 40 mass%.

### Constitution 7:

The non-aqueous electrolyte secondary battery according to any one of Constitutions 1 to 6, wherein the silicon-containing material includes an ion-conductive phase and silicon phases dispersed in the ion-conductive phase.

### Constitution 8:

The non-aqueous electrolyte secondary battery according to Constitution 7, wherein the ion-conductive phase is at least one selected from the group consisting of a silicate phase, a carbon phase, a silicide phase, and a silicon oxide phase.

### Constitution 9:

The non-aqueous electrolyte secondary battery according to Constitution 7 or 8, wherein a proportion of a total mass of the silicon phase relative to a total mass of the silicon-containing material is greater than or equal to 30 mass% and less than or equal to 60 mass%.

### REFERENCE SIGNS LIST

10 Non-aqueous electrolytic solution secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower valve member, 25 Insulating member, 26 Upper valve member, 27 Cap, 28 Gasket, 30 Positive electrode current collector, 32 Positive electrode mixture layer, 40 Negative electrode current collector, 42 Negative electrode mixture layer

## Claims

1. A non-aqueous electrolyte secondary battery, comprising:
an electrode assembly having a positive electrode and a negative electrode; and
a non-aqueous electrolyte, wherein
the positive electrode has a positive electrode current collector and a positive electrode mixture layer disposed on the positive electrode current collector,
the negative electrode has a negative electrode current collector and a negative electrode mixture layer disposed on the negative electrode current collector,
the positive electrode mixture layer includes a positive electrode active material,
the positive electrode active material having a first peak and a second peak in a volume-based particle size distribution curve,
the negative electrode mixture layer including a negative electrode active material, wherein
the negative electrode active material includes at least a silicon-containing material, and
a discharge capacity per 1.0 g of the negative electrode mixture layer is greater than or equal to 0.60 Ah.

2. The non-aqueous electrolyte secondary battery according to claim 1, wherein the first peak has a peak top at a position of greater than or equal to 0.5 µm and less than 5.0 µm, and the second peak has a peak top at a position of greater than or equal to 10.0 µm and less than or equal to 20.0 µm.

3. The non-aqueous electrolyte secondary battery according to claim 1, wherein a basis weight of the positive electrode mixture layer is greater than or equal to 250 g/m² and less than or equal to 400 g/m² or less.

4. The non-aqueous electrolyte secondary battery according to any one of claims 1 to 3, wherein a proportion of a total mass of silicon element contained in the silicon-containing material relative to a mass of the negative electrode mixture layer is greater than or equal to 12 mass%.

5. The non-aqueous electrolyte secondary battery according to any one of claims 1 to 3, wherein a proportion of a total mass of silicon element contained in the silicon-containing material relative to a mass of the negative electrode mixture layer is less than or equal to 50 mass%.

6. The non-aqueous electrolyte secondary battery according to any one of claims 1 to 3, wherein a proportion of a total mass of silicon element contained in the silicon-containing material relative to a mass of the negative electrode mixture layer is less than or equal to 40 mass%.

7. The non-aqueous electrolyte secondary battery according to any one of claims 1 to 3, wherein the silicon-containing material includes an ion-conductive phase and silicon phases dispersed in the ion-conductive phase.

8. The non-aqueous electrolyte secondary battery according to claim 7, wherein the ion-conductive phase is at least one selected from the group consisting of a silicate phase, a carbon phase, a silicide phase, and a silicon oxide phase.

9. The non-aqueous electrolyte secondary battery according to claim 7, wherein a proportion of a total mass of the silicon phase relative to a total mass of the silicon-containing material is greater than or equal to 30 mass% and less than or equal to 60 mass%.
